# FASCICULE DE BREVET EUROPEEN

(11) **EP 3 183 293 B1**
(45) Date de publication et mention de la délivrance du brevet: **18.10.2023**
(21) Numéro de dépôt: 15759693.3
(22) Date de dépôt: 21.08.2015
(51) Int. Cl.: C08K 7/14, C08K 9/06, H01K 5/00, H02B 1/00

(54) **ELEMENT DE BOITIER D'APPAREILLAGE ELECTRIQUE COMPRENANT UNE COMPOSITION IGNIFUGE SPECIFIQUE**
ELEMENT FÜR EIN GEHÄUSE FÜR EINE ELEKTRISCHE VORRICHTUNG MIT EINER SPEZIFISCHEN FLAMMSICHEREN ZUSAMMENSETZUNG
ELEMENT FOR A HOUSING FOR ELECTRICAL APPARATUS, COMPRISING A SPECIFIC FLAMEPROOF COMPOSITION

(30) Priorité: 21.08.2014 FR 1457910
(43) Date de publication de la demande: 28.06.2017
(73) Titulaire: Schneider Electric Industries SAS, 92500 Rueil-Malmaison (FR)
(72) Inventeur: OHL, Brigitte, F-38800 Champagnier (FR); MICHAUX, Gwenaëlle, F-59510 Frest Sur Marque (FR); DUQUESNE, Sophie, F-59350 Saint Andre Lez Lille (FR); CASETTA, Mathilde, F-59830 Cysoing (FR); BOURBIGOT, Serge, 38050 Grenoble Cedex 09 (FR)
(74) Mandataire: Brevalex
(86) Numéro de dépôt international: PCT/EP2015/069265
(87) Numéro de publication internationale: WO 2016/026967

(56) Documents cités:
- WO-A1-2012/175880
- WO-A1-2014/036720
- DATABASE WPI Week 200935 21 mai 2009 (2009-05-21) Thomson Scientific, London, GB; AN 2009-J40299 XP002738398, -& JP 2009 108221 A (TORAY IND INC) 21 mai 2009 (2009-05-21)

## Description

### DOMAINE TECHNIQUE

L'invention concerne un élément de boîtier pour appareillage électrique comprenant une composition composite ignifuge comprenant une association originale d'au moins un polymère appartenant à la catégorie des polyamides, d'au moins deux types de charge spécifiques, d'au moins un agent ignifuge spécifique, cette composition répondant à des propriétés mécaniques très favorables alliées à d'excellentes propriétés ignifuges et plus spécifiquement présentant :
- une faible reprise en humidité ;
- une forte tenue au cheminement d'arc ;
- une résistance au feu élevée ;
- une absence de corrosivité vis-à-vis des outils avec lesquels la composition est mise en contact lors de sa mise en forme ; et
- une innocuité vis-à-vis de l'environnement et de la santé des personnes destinées à être en contact avec la composition constitutive de l'élément de boîtier.

### ÉTAT DE LA TECHNIQUE ANTÉRIEURE

Les compositions composites à base d'au moins un polymère thermoplastique, telles que les compositions à base de polyamides, sont utilisées couramment dans l'industrie électrique en raison des propriétés inhérentes de ce type de polymères en termes de facilité de mise en œuvre et de mise en forme, de propriétés mécaniques, de faible densité et de coûts modérés, par rapport notamment à des matériaux plus traditionnels tels que le métal, la laine, le bois ou le verre.

Toutefois, les polymères thermoplastiques, comme les polyamides, en raison de leur nature organique, présentent un caractère hautement inflammable, ce qui nécessite l'utilisation d'agents ignifuges, afin qu'ils puissent être utilisés dans des environnements soumis à des températures élevées, tel que cela est le cas avec les appareils électriques.

En effet, les compositions composites utilisées dans les appareils électriques doivent satisfaire à des normes sévères en matière de résistance au feu, lesquelles normes sont notamment régies par les normes de la CEI applicables en Europe, et notamment en France, telles que :
- la norme CEI 60695-2-11 pour produits finis, qui définit la performance d'inflammabilité requise GWFI (correspondant à la terminologie anglaise « Glow Wire Flamability Index »), laquelle peut s'élever à 850°C pour le matériel continu sans surveillance ou à 960°C pour le matériel placé dans des conditions plus drastiques ; ou
- la norme CEI 60695-2-13, qui définit la performance d'allumabilité GWIT (correspondant à la terminologie anglaise « Glow Wire Ignition Température »), laquelle doit se situer au minimum à 775°C ;
et les normes applicables aux Etats-Unis telles que :
- la norme UL94, qui constitue une norme destinée à tester l'inflammabilité du matériau et, plus spécifiquement, sa tendance à éteindre ou à répandre une flamme une fois que l'ignition de l'échantillon a démarré, le matériau testé dans une position verticale devant s'auto-éteindre au bout de 60 secondes, une fois que la source d'ignition a été éliminée selon la norme plus spécifique UL94V2.

Des agents ignifuges couramment utilisés sont les agents ignifuges halogénés, tels que ceux décrits notamment dans JP2005-200636A. Toutefois, ces agents risquent d'être interdits à terme, car ils présentent des inconvénients vis-à-vis de l'environnement, en raison de leur caractère hautement toxique, notamment lorsqu'ils sont soumis à une combustion.

En substitution des agents ignifuges halogénés, il peut être utilisé des agents ignifuges non halogénés, tels que :
- des composés phosphorés organiques, comme des composés phosphinates ou diphosphinates décrits notamment dans JP 2010-077194A, ces composés présentant un inconvénient vis-à-vis des outillages utilisés pour la mise en forme des compositions les comprenant, car ils sont susceptibles de relarguer de l'acide phosphorique, qui présente un effet hautement corrosif ;
- des composés cyanurates, et plus spécifiquement des composés appartenant à la famille des cyanurates de mélamine, qui peuvent être préoccupants pour la santé et critiques en cas de sévérisation des normes GWIT et UL.

Enfin, les agents ignifuges, pour remplir leur fonction, sont très souvent incorporés à des teneurs très élevées dans les compositions composites, ce qui contribue à dégrader les propriétés mécaniques de ces dernières et ce qui peut également générer des problèmes de pollution induits par l'exsudation de l'agent ignifuge, lors de l'utilisation de l'appareil dans lequel les compositions sont incorporées.

Les problèmes rencontrés en terme environnemental pour les agents ignifuges halogénés peuvent également se retrouver avec les polymères thermoplastiques entrant dans la constitution des compositions composites.

Ceci est le cas notamment lorsque les polymères appartiennent à la famille des polystyrènes, des poly(chlorure de vinyle), qui, d'une part, sont tributaires, pour leur élaboration, de la chimie du pétrole relativement polluante et, d'autre part, présentent des difficultés de recyclage, une fois leur utilisation arrivée à échéance.

Face aux problématiques susmentionnées, les auteurs de la présente invention se sont fixé pour but de mettre au point un élément de boîtier pour appareillage électrique à base d'une composition spécifique répondant aux spécificités suivantes :
- des propriétés ignifuges sans recourir à des agents ignifuges halogénés ou à des agents ignifuges halogénés des types mentionnés ci-dessus et présentant notamment des propriétés de résistance au feu selon les normes GWFI et UL94;
- l'absence de problèmes liés à l'environnement et à la santé ;
- l'absence d'effet corrosif notamment lors de la conception de l'élément par moulage.

En plus, l'élément de boîtier de l'invention peut répondre aux spécificités suivantes :
- des propriétés de résistance à l'humidité pour résister à un environnement extérieur humide, du fait de la capacité de la composition à faire effet barrière vis-à-vis de l'humidité ;
- des propriétés de résistance au cheminement d'arc ;
- des propriétés de bonne durabilité ; et
- des propriétés mécaniques permettant d'accéder à une forte stabilité dimensionnelle, notamment lorsque l'élément est destiné à entrer dans des mécanismes ou des montages très ajustés (tels que les embases d'interrupteurs, les prises électriques).

Ce but a été atteint par un élément de boîtier pour appareillage électrique comprenant une composition composite ignifuge comprenant une association originale d'au moins un polymère thermoplastique spécifique, d'au moins deux types de charge spécifiques et d'au moins un agent ignifuge spécifique.

### EXPOSÉ DE L'INVENTION

Ainsi, l'invention a trait à un élément de boîtier pour appareillage électrique défini par la revendication 1 comprenant une composition composite comprenant une matrice polymérique comprenant au moins un polymère polyamide, dans laquelle sont dispersés des fibres de verre, du dioxyde de titane se présentant sous forme de particules de dioxyde de titan revêtues d'une couche comprenant un mélange de composés à base d'alumine et de silice et d'un composé polysiloxane, et un composé se présentant sous forme de particules de dihydroxyde de magnésium Mg(OH)₂ revêtues d'une couche comprenant un composé vinylsilane.

Par polyamide, on entend un polymère du type polycondensat, dans lequel les unités répétitives sont liées par le biais de groupes amides, ce type de polymère pouvant être des homopolymères (à savoir des polymères comprenant un seul et même type d'unités répétitives) ou des copolymères (à savoir des polymères comprenant plusieurs types d'unités répétitives).

Les polyamides de l'invention, sont des polyamides linéaires, tels que ceux résultant classiquement d'une polycondensation d'un acide dicarboxylique comprenant de 4 à 12 atomes de carbone avec une diamine comprenant de 4 à 14 atomes de carbone ou encore résultant d'une polycondensation par ouverture de cycle de composés lactames.

Des polyamides répondant à cette définition peuvent être, en particulier :
- des polyamides 6, à savoir des polyamides comprenant un enchaînement d'unités répétitives de formule (I) suivante : 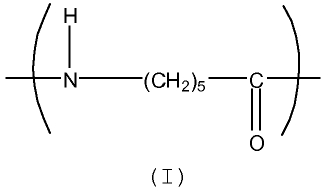
- des polyamides 6/66, à savoir des polyamides comprenant un enchaînement d'unités répétitives de formule (I) suivante : 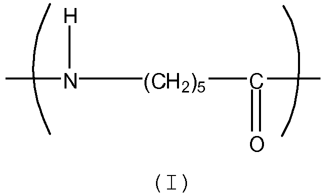
et d'unités répétitives de formule (II) suivante : 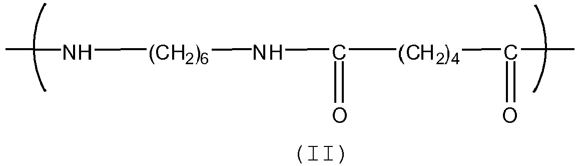
- le polyamide 6-10, à savoir un polyamide classiquement obtenu par polycondensation d'acide sébaçique et d'hexaméthylènediamine conduisant ainsi à un polyamide comprenant un enchaînement d'unités répétitives de formule (III) suivante : 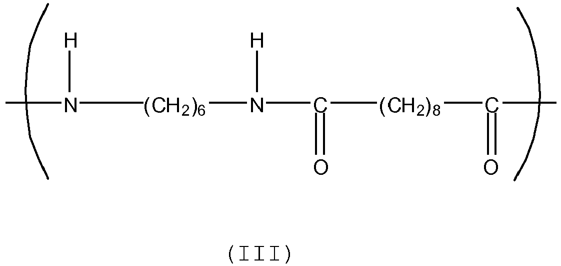
- le polyamide 11, à savoir un polyamide classiquement obtenu par polycondensation d'acide aminoundécanoïque conduisant ainsi à un polyamide comprenant un enchaînement d'unités répétitives de formule (IV) suivante : 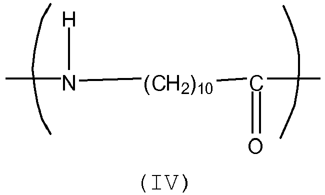
- le polyamide 12, à savoir un polyamide classiquement obtenu par polycondensation d'acide aminododécanoïque conduisant ainsi à un polyamide comprenant un enchaînement d'unités répétitives de formule (V) suivante : 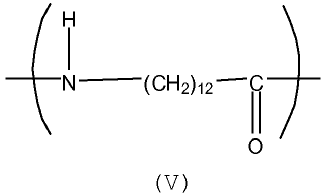 et
- des mélanges de ceux-ci.

Ces polymères peuvent être des polymères vierges (c'est-à-dire de première utilisation), éventuellement biosourcés (c'est-à-dire issus de la biomasse animale ou végétale) ou peuvent être issus d'un recyclage mécanique et/ou chimique.

Ces polymères sont particulièrement intéressants pour entrer dans la composition composite de l'invention, dans la mesure où ils présentent les caractéristiques suivantes :
- ils sont thermoplastiques, ce qui rend la composition les comprenant particulièrement malléable et à même de pouvoir constituer des pièces de formes variées ;
- ils sont dénués d'atomes d'halogènes, ce qui est compatible avec les règles environnementales en vigueur, et notamment avec la directive européenne Reach ;
- ils présentent de bonnes propriétés mécaniques à hautes températures et à contraintes élevées ;
- ils sont facilement disponibles, car ils sont produits selon des tonnages très importants, ce qui les rend particulièrement intéressants en termes de coûts.

Outre le ou les polyamides susmentionnés, la matrice polymérique peut comprendre un ou plusieurs autres (co)polymères, tels que des polyoléfines seules ou en mélange. En particulier, il peut s'agir d'un polypropylène éventuellement en mélange avec un caoutchouc, comme un caoutchouc d'éthylène-propylène (le mélange résultant pouvant être qualifié, de manière générale, de copolymère hétérophasique de polypropylène, c'est-à-dire un mélange de polypropylène avec un additif du type copolymère, tel que du caoutchouc).

Encore plus spécifiquement, il peut s'agir d'un mélange de propylène avec un additif de choc, tel que le grade Total PPC 7712.

Comme mentionné plus haut, le ou les polymères présents dans la composition composite constituent une matrice polymérique, ce qui signifie, en d'autres termes, qu'ils constituent le liant polymérique pour les autres ingrédients de la composition composite et qu'ils assurent, par la même occasion, la cohésion de l'ensemble.

La matrice représente de 35 à 47% en masse par rapport à la masse totale de la composition composite.

Les fibres de verre utilisées dans les compositions composites peuvent assurer un rôle de renfort et peuvent être comprises selon des teneurs variables. Elles sont comprises dans l'invention selon une teneur allant de 10 à 16% en masse par rapport à la masse totale de la composition composite.

Comme mentionné ci-dessus, la composition composite comprend, également, un composé se présentant sous forme de particules de dihydroxyde de magnésium Mg(OH)₂ revêtues d'une couche comprenant un composé vinylsilane.

On précise que, par composé vinylsilane, on entend un composé de formule (VI) suivante : 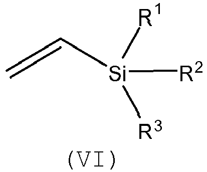 dans laquelle R¹ à R³ représentent indépendamment, l'un de l'autre, un atome d'hydrogène, un groupe alkyle.

Le composé se présentant sous forme de particules de dihydroxyde de magnésium Mg(OH)₂ revêtues d'une couche comprenant un composé vinylsilane présente d'excellentes propriétés de dispersion dans la matrice susmentionnée. Il peut se caractériser aussi par une surface spécifique pouvant aller de 4 à 6 m²/g (mesurée par la méthode BET).

Le composé, dans le cadre de l'invention, se présente sous forme de particules présentant, de préférence, un diamètre moyen de particules d50 (en pm) allant de 1,4 à 2,0 mesuré avec un appareil Malvern Mastersizer 2000 (par diffraction laser).

Plus spécifiquement, le composé susmentionné peut être un composé vendu sous la dénomination Magnifin^{®} H-5A par la société Albermarle^{®}.

Le composé susmentionné est présent en une teneur d'au moins égale à 40% en masse par rapport à la masse totale de la composition composite et, de préférence, en une teneur allant de 40 à 50% en masse par rapport à la masse totale de la composition composite.

Outre la matrice polymérique, les fibres de verre et le composé spécifique susmentionné, la composition composite comprend, en outre, du dioxyde de titane, lequel est, avantageusement, sous la forme cristallographique rutile.

Plus spécifiquement, le dioxyde de titane susmentionné se présente sous forme de particules de dioxyde de titane revêtues d'une couche comprenant un mélange de composés à base d'alumine et de silice (destinés notamment à optimiser le mécanisme de photopassivation inhérent au dioxyde de titane) et d'au moins un composé polysiloxane.

Un dioxyde de titane de ce type peut être notamment celui vendu sous la dénomination Kronos^{®} 2222 par la société Mackwell.

En association avec les autres ingrédients de la composition composite, il a pu être démontré que le dioxyde de titane contribue à réduire la reprise en humidité et à accroître sensiblement la résistance au cheminement d'arc, alors que le dioxyde de titane (en particulier, celui du type particulier mentionné ci-dessus) n'est pas connu pour accéder à ces propriétés.

Le dioxyde de titane, spécifiquement celui du type particulier mentionné ci-dessus est présent en une teneur allant de 2,5 en 3,5% en masse par rapport à la masse totale de la composition composite.

En outre, les compositions composites peuvent comprendre un matériau comprenant un composé silicone, par exemple, comprenant des fonctions acryliques ou acrylates (et plus spécifiquement (méth)acryliques ou (méth)acrylates), tel qu'un composé polyorganosiloxane, lequel matériau peut comprendre, en outre, une charge du type silice.

Plus spécifiquement, ce matériau peut se présenter sous forme d'une poudre comprenant des particules de polyorganosiloxane et des particules de silice.

Le composé silicone peut répondre à la formule suivante : 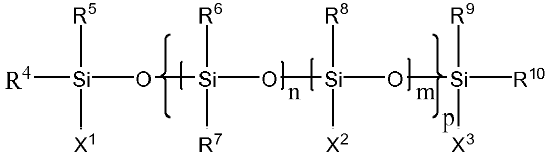 dans laquelle :
- R⁴ à R¹⁰ représentent, indépendamment l'un de l'autre, un atome d'hydrogène, un groupe alkyle en C₁ à C₁₀, un groupe alcényle, un groupe cycloalkyle ou un groupe aryle ;
- n, m et p sont des entiers correspondant aux nombres de répétition des motifs pris entre parenthèses ;
- p est un entier allant de 1000 à 8000, de préférence, de 3000 à 6000 ;
- la proportion relative en masse des motifs n et des motifs m est de 98,5 à 100 :0 à 1,5, de préférence 99 :1 ; et
- X¹ à X³ représentant, indépendamment l'un de l'autre, un groupe acrylate de formule -(CR¹¹R¹²)_{q}-COOR¹³, dans laquelle R¹¹ à R¹³ représentent, indépendamment l'un de l'autre, un atome d'hydrogène, un groupe alkyle en C₁ à C₁₀, un groupe alcényle, un groupe cycloalkyle ou un groupe aryle et q est un entier correspondant au nombre de répétition du motif pris entre parenthèses, ce nombre pouvant aller de 1 à 10.

La charge du type silice peut être de la silice fumée, de la silice précipitée ou un gel de silice. Lorsqu'elle se présente sous forme de particules, elle peut être caractérisée par une surface spécifique d'au moins 50 m²/g, de préférence de 50 à 900 m²/g.

Un exemple de matériau comprenant un composé silicone comprenant des fonctions méthacryliques est celui commercialisé par la société Dow Corning sous la référence D4-7081.

Le matériau comprenant un composé silicone comprenant des fonctions acryliques ou acrylates (et plus spécifiquement, (méth)acryliques ou (méth)acrylates)), tel qu'un composé polyorganosiloxane, et éventuellement une charge du type silice peut être présent dans la composition composite selon une teneur allant de 4 à 6% en masse par rapport à la masse totale de la composition composite.

Enfin, les compositions composites peuvent comprendre d'autres additifs, tels que des additifs antioxydants, des additifs lubrifiants.

Des compositions composites spécifiques destinées à entrer dans la constitution des éléments de boîtier de l'invention peuvent être des compositions composites comprenant :
- une matrice polymérique à base d'un polyamide, plus spécifiquement un polyamide 6 ;
- des fibres de verre selon une teneur allant de 10% à 16% en masse par rapport à la masse totale de la composition composite ;
- des particules de dihydroxyde de magnésium Mg(OH)₂ revêtues d'une couche comprenant un composé vinylsilane, par exemple, selon une teneur de 40% en masse par rapport à la masse totale de la composition composite ;
- des particules de dioxyde de titane revêtues d'une couche comprenant un mélange de composés à base d'alumine et de silice et d'un composé polysiloxane, par exemple, selon une teneur de 3% en masse par rapport à la masse totale de la composition composite ; et
- éventuellement un matériau comprenant un composé silicone comprenant des fonctions (méth)acryliques.

De manière plus spécifique, des compositions composites particulières susceptibles d'entrer dans la constitution des éléments de boîtier de l'invention peuvent être choisies parmi les compositions composites suivantes :
*une composition composite comprenant :
   - une matrice polymérique en polyamide 6, à hauteur de 46,4% en masse par rapport à la masse totale de la composition composite ;
   - des fibres de verre à hauteur de 10% en masse par rapport à la masse totale de la composition composite ;
   - des particules de dihydroxyde de magnésium Mg(OH)₂ revêtues d'une couche comprenant un composé vinylsilane, à hauteur de 40% en masse par rapport à la masse totale de la composition composite ;
   - des particules de dioxyde de titane revêtues d'une couche comprenant un mélange de composés à base d'alumine et de silice et d'un composé polysiloxane, à hauteur de 3% en masse par rapport à la masse totale de la composition composite ;
   - un additif antioxydant à hauteur de 0,3% en masse par rapport à la masse totale de la composition composite ; et
   - de la cire à hauteur de 0,3% en masse par rapport à la masse totale de la composition composite ; et
*une composition composite comprenant :
   - une matrice polymérique en polyamide 6, à hauteur de 35,8% en masse par rapport à la masse totale de la composition composite ;
   - des fibres de verre à hauteur de 15,6% en masse par rapport à la masse totale de la composition composite ;
   - des particules de dihydroxyde de magnésium Mg(OH)₂ revêtues d'une couche comprenant un composé vinylsilane, à hauteur de 40% en masse par rapport à la masse totale de la composition composite ;
   - des particules de dioxyde de titane revêtues d'une couche comprenant un mélange de composés à base d'alumine et de silice et d'un composé polysiloxane, à hauteur de 3% en masse par rapport à la masse totale de la composition composite ;
   - un matériau comprenant un composé silicone comprenant des fonctions méthacryliques, ledit matériau étant présent à hauteur de 5% en masse par rapport à la masse totale de la composition composite ;
   - un additif antioxydant à hauteur de 0,3% en masse par rapport à la masse totale de la composition composite ; et
   - de la cire à hauteur de 0,3% en masse par rapport à la masse totale de la composition composite.

Ces compositions peuvent être fabriquées par un procédé d'extrusion conventionnel, à l'issue duquel des granulés injectables sont élaborés.

Par la suite, ces granulés sont moulés par injection conventionnellement pour former l'élément de boîtier pour appareillage électrique, lequel élément peut être formé sur un socle comprenant une matrice compatible avec le ou les polyamides constitutifs de la matrice de l'élément de boîtier.

L'invention a également trait à un appareillage électrique comprenant au moins un boîtier comprenant au moins un élément de boîtier tel que défini ci-dessus.

Plus spécifiquement, il peut s'agir d'un appareillage électrique, par exemple, basse-tension, comprenant un circuit électrique logé dans ledit boîtier, tel qu'une prise de courant, un disjoncteur, une embase d'interrupteur, une armoire électrique, un coffret électrique, un éclairage de sécurité, un capteur électrique, un onduleur, un minuteur, un gradateur ou un détecteur de mouvement(s), de préférence, un disjoncteur. De préférence encore, il peut s'agir d'un boîtier de disjoncteur (ou contacteur) basse-tension, notamment monopolaire.

Il peut s'agir également d'un appareillage électrique du type appareil de coupure basse-tension comprenant deux contacts mobiles relativement l'un à l'autre entre une position ouverte et une position fermée, lesdits contacts étant logés dans ledit boîtier.

Les éléments de boîtier peuvent être fabriqués par divers procédés de mise en forme de compositions plastiques avec, pour préférence, les procédés de moulage.

D'autres caractéristiques et avantages de l'invention ressortiront du complément de description qui suit.

Il va de soi, toutefois, que ce complément de description n'est donné qu'à titre d'illustration de l'objet de l'invention et ne constitue en aucune manière une limitation de cet objet.

### EXPOSÉ DÉTAILLÉ D'UN MODE DE RÉALISATION PARTICULIER

### EXEMPLE 1

Dans cet exemple, sont testées trois compositions :
- une composition non conforme à l'invention (dite composition de référence) ; et
- deux compositions conformes à l'invention (dite composition 1 et composition 2) ;
en termes de reprise en humidité, de tenues au feu (par le biais des tests GWFI et UL94) et de résistance au cheminement à l'arc (par le biais du test CTI).

Les protocoles des tests susmentionnés sont les suivants.

Concernant la reprise en humidité, trois tests sont réalisés :
- un test après 24 heures à 23°C sous 50% d'humidité relative ;
- un test après 24 heures dans l'eau à température ambiante ;
- un test dans l'eau à température ambiante jusqu'à saturation.

Concernant le test sous 50% d'humidité relative, la méthode utilisée est proche de la norme DIN 53 495. Pour ce faire, des éprouvettes de 80*80*1 mm sont tout d'abord séchées par conditionnement à 50±2°C dans une étuve pendant 24 heures. Ensuite, elles sont refroidies à 23±2°C pendant 2 heures dans un dessicateur puis pesées (la masse obtenue étant dénommée m₁). Ensuite, elles sont conditionnées jusqu'à saturation dans une ambiance à 50±2% d'humidité relative à une température de 23±0,5°C puis pesées (la masse obtenue étant dénommée m₂).

La reprise en humidité se calcule *via* l'équation [(m₂-m₁)/m₁]*100.

Concernant le test après 24 heures dans l'eau à température ambiante, la méthode utilisée est proche de la norme ISO 62. Des éprouvettes de 80*80*1 mm sont tout d'abord séchées par conditionnement à 50±2°C dans une étuve pendant 24 heures. Ensuite, elles sont refroidies à 23±2°C pendant 2 heures dans un dessicateur puis pesées (la masse obtenue étant dénommée m₁). Ensuite, les éprouvettes sont placées dans un conteneur rempli d'eau distillée à 23±1°C. Après immersion pendant 24±1 heures, les éprouvettes sont ressorties. L'eau en surface est éliminée avec un papier filtre ou un tissu absorbant. Les éprouvettes sont pesées au bout d'une minute après qu'elles aient été enlevées du conteneur rempli d'eau (la masse obtenue étant dénommée m₂).

La reprise en humidité se calcule *via* l'équation [(m₂-m₁)/m₁]*100.

Concernant le test en immersion dans l'eau à température ambiante jusqu'à saturation, il se pratique en prolongeant le test précédemment décrit. Après la pesée intervenant au bout de 24 heures, les éprouvettes sont immergées à nouveau dans les mêmes conditions puis pesée à intervalles de temps espacées (par exemple, 24, 48, 96, 192 heures) jusqu'à ce que la masse m₂ n'évolue plus.

La reprise en humidité se calcule également *via* l'équation [(m₂-m₁)/m₁]*100.

Concernant le test GWFI, il consiste à réaliser des essais au fil incandescent (ces essais étant dénommés également par la terminologie anglaise « Glow wire test ») avec les compositions explicitées ci-dessous, celles-ci étant mises sous forme d'un film d'une épaisseur de 1,6 mm.

Ces essais consistent à appliquer sur les différentes compositions un fil incandescent présentant respectivement une température de 825°C, 900°C et 960°C pendant 30 secondes. Si, après retrait du fil, aucune flamme ni aucune incandescence ne sont observées ou si les flammes s'éteignent en moins de 30 secondes après retrait du fil incandescent, la composition sera considérée comme résistante au feu.

Concernant le test UL94, celui-ci a pour objet d'étudier le comportement en présence d'une flamme des compositions susmentionnées mises sous forme d'éprouvettes d'une longueur de 150 mm, d'une largeur de 13 mm et d'une épaisseur de 1,6 mm.

Pour le classement V2, le test consiste à mesurer la durée de combustion d'éprouvettes placées en position verticale et soumises à une flamme pilote. Les critères sont les suivants :
- une durée de combustion enflammée après chaque application de la flamme inférieure ou égale à 30 secondes ;
- une durée totale de combustion enflammée après dix applications de la flamme (5 éprouvettes*2 applications) inférieure ou égale à 250 secondes ;
- une absence de combustion enflammée ou incandescente atteignant la fixation (127 mm). Pour précision, l'éprouvette est fixée par une pince qui ne laisse apparaître qu'une longueur utile de 127 mm, le reste pris dans le montant de la pince n'étant pas pris considération, du fait qu'il n'est pas en contact avec la flamme ;
- en cas d'inflammation d'un coton par coulage de particules enflammées le coulage de gouttes enflammant le coton est acceptable ;
- une durée de combustion incandescente après la deuxième application de la flamme inférieure ou égale à 60 secondes ;
- une longueur de combustion en test horizontal inférieure ou égale à 102 mm.

Pour le classement V1, les exigences sont les mêmes que pour le classement V2 à une exception près. Il ne doit pas se produire d'inflammation au coton au cas où un coulage de gouttelettes enflammées se produirait.

Concernant le test CTI (abréviation correspondant à la terminologie anglaise « Coefficient of tracking index », la terminologie française appropriée étant l'Indice de Résistance au Cheminement), il est réalisé selon la norme CEI 112 (Solution A). Le cheminement est la formation progressive de trajets conducteurs produits à la surface d'un produit isolant solide sous l'effet combiné des contraintes électriques et de la contamination électrolytique de cette surface.

A partir des compositions susmentionnées, il est fabriqué des éprouvettes se présentant sous forme de plaques de dimensions 15*15 mm et d'épaisseur 3 mm. Entre deux électrodes de platine (de longueur 5 mm, distantes de 4 mm) mises en contact avec les éprouvettes, on fait tomber des gouttes d'une solution ionique dénommée solution A à 0,1% de NH₄Cl selon les conditions suivantes :
- Volume des gouttes : 20 à 23 mm³ ;
- Débit : 1 goutte toutes les 30±5 secondes.

On observe s'il se produit un cheminement, c'est-à-dire si un courant supérieur ou égal à 0,5 A circule pendant au moins deux secondes entre les électrodes ou si l'éprouvette brûle.

L'indice de résistance au cheminement CTI est la tension maximale (en volts) pour laquelle on peut déposer 50 gouttes de solution A sans cheminement et en vérifiant qu'une tension inférieure de 25 V permet une tenue de 100 gouttes.

La composition non conforme à l'invention comprend les ingrédients suivants :
- une matrice polymérique en polyamide 6, à hauteur de 65,9% en masse par rapport à la masse totale de la composition ;
- des fibres de verre à hauteur de 20% en masse par rapport à la masse totale de la composition ;
- du cyanurate de mélamine à hauteur de 10,5% en masse par rapport à la masse totale de la composition ;
- des particules de dioxyde de titane à hauteur de 3% en masse par rapport à la masse totale de la composition ;
- un additif antioxydant à hauteur de 0,3% en masse par rapport à la masse totale de la composition ; et
- de la cire à hauteur de 0,3% en masse par rapport à la masse totale de la composition.

La composition 1 conforme à l'invention comporte les ingrédients suivants :
- une matrice polymérique en polyamide 6, à hauteur de 46,4% en masse par rapport à la masse totale de la composition ;
- des fibres de verre à hauteur de 10% en masse par rapport à la masse totale de la composition ;
- des particules de dihydroxyde de magnésium Mg(OH)₂ revêtues d'une couche comprenant un composé vinylsilane de la marque H5A, à hauteur de 40% en masse par rapport à la masse totale de la composition ;
- des particules de dioxyde de titane revêtues d'une couche comprenant un mélange de composés à base d'alumine et de silice et d'un composé polysiloxane de la marque Kronos 2222^{®}, à hauteur de 3% en masse par rapport à la masse totale de la composition ;
- un additif antioxydant de la marque Irganox 1171^{®} à hauteur de 0,3% en masse par rapport à la masse totale de la composition ; et
- de la cire à hauteur de 0,3% en masse par rapport à la masse totale de la composition.

La composition 2 comprend les ingrédients suivants :
- une matrice polymérique en polyamide 6, à hauteur de 35,8% en masse par rapport à la masse totale de la composition ;
- des fibres de verre à hauteur de 15,6% en masse par rapport à la masse totale de la composition ;
- des particules de dihydroxyde de magnésium Mg(OH)₂ revêtues d'une couche comprenant un composé vinylsilane de la marque H5A, à hauteur de 40% en masse par rapport à la masse totale de la composition ;
- des particules de dioxyde de titane revêtues d'une couche comprenant un mélange de composés à base d'alumine et de silice et d'un composé polysiloxane de la marque Kronos 2222^{®}, à hauteur de 3% en masse par rapport à la masse totale de la composition ;
- un matériau comprenant un composé silicone de la marque D4-7081^{®} de la société Dow Corning, à hauteur de 5% en masse par rapport à la masse totale de la composition ;
- un additif antioxydant de la marque Irganox 1171^{®} à hauteur de 0,3% en masse par rapport à la masse totale de la composition ; et
- de la cire à hauteur de 0,3% en masse par rapport à la masse totale de la composition.

Les résultats des tests sont regroupés dans le tableau suivant :

| Tests | Composition de référence | Composition 1 | Composition 2 |
|---|---|---|---|
| Reprise d'humidité | | | |
| -Après 24h à 23°C sous 50% d'humidité relative | 0, 17% | 0,11% | 0,06% |
| -Après 24H dans l'eau à température ambiante | 2,58% | 1,55% | 0,19% |
| -Jusqu' à saturation | 6,44% (240h) | 5,16% (312h) | 3,4% (288h) |
| GWFI | 825/1,6 mm | 900/1,6 mm | 960/1,6 mm |
| UL94 | V2/1, 6 mm | V2/1, 6 mm | V1/1,6 mm |
| CTI | 450 V | 750 V | 800 V |

Des résultats de ce tableau, on peut en déduire que les compositions de l'invention permettent d'obtenir des meilleurs résultats tant en termes de reprise d'humidité, de comportement au feu que de résistance au cheminement d'arc, en particulier pour la composition 2.

## Revendications

1. Elément de boîtier pour appareillage électrique comprenant une composition composite comprenant une matrice polymérique comprenant au moins un polymère polyamide linéaire résultant d'une polycondensation d'un acide dicarboxylique comprenant de 4 à 12 atomes de carbone avec une diamine comprenant de 4 à 14 atomes de carbone ou résultant d'une polycondensation par ouverture de cycle de composés lactames, ladite matrice représentant de 35 à 47% en masse par rapport à la masse totale de la composition composite , dans laquelle sont dispersés des fibres de verre présent en une teneur allant de 10 à 16% en masse par rapport à la masse totale de la composition composite, du dioxyde de titane se présentant sous forme de particules de dioxyde de titane revêtues d'une couche comprenant un mélange de composés à base d'alumine et de silice et d'un composé polysiloxane, ledit dioxyde de titane étant présent en une teneur allant de 2,5 à 3,5% en masse par rapport à la masse totale de la composition composite, et un composé se présentant sous forme de particules de dihydroxyde de magnésium Mg(OH)₂ revêtues d'une couche comprenant un composé vinylsilane, ledit composé étant présent en une teneur d'au moins égale à 40% en masse par rapport à la masse totale de la composition composite.

2. Elément de boîtier selon la revendication 1, dans lequel les polyamides sont choisis parmi :
- des polyamides 6, à savoir des polyamides comprenant un enchaînement d'unités répétitives de formule (I) suivante : 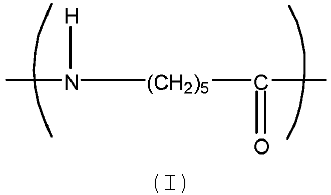
- des polyamides 6/66, à savoir des polyamides comprenant un enchaînement d'unités répétitives de formule (I) suivante : 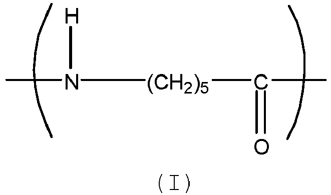
et d'unités répétitives de formule (II) suivante : 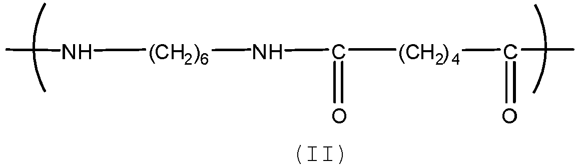
- des polyamides 6-10, à savoir des polyamides comprenant un enchaînement d'unités répétitives de formule (III) suivante : 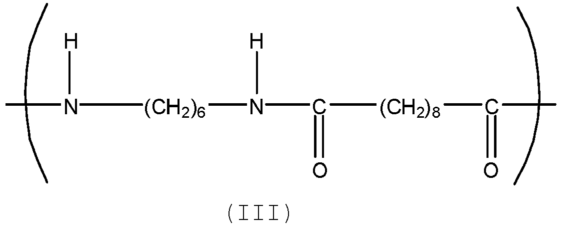
- des polyamides 11, à savoir des polyamides comprenant un enchaînement d'unités répétitives de formule (IV) suivante : 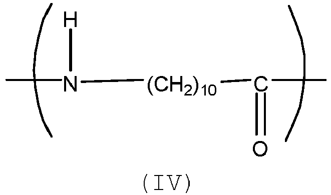
- des polyamides 12, à savoir des polyamides comprenant un enchaînement d'unités répétitives de formule (V) suivante : 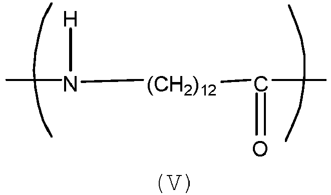 et
- des mélanges de ceux-ci.

3. Elément de boîtier selon l'une quelconque des revendications précédentes, dans lequel le dioxyde de titane est sous la forme rutile.

4. Elément de boîtier selon l'une quelconque des revendications précédentes, dans lequel la composition composite comprend, en outre, un matériau comprenant un composé silicone comprenant des fonctions (méth)acryliques.

5. Elément de boîtier selon la revendication 4, dans lequel le matériau est présent dans la composition composite selon une teneur allant de 4 en 6 % en masse par rapport à la masse totale de la composition composite.

6. Elément de boîtier selon l'une quelconque des revendications précédentes, dans lequel la composition composite comprend, en outre, un ou plusieurs additifs choisis parmi les additifs antioxydants et les additifs lubrifiants.

7. Elément de boîtier selon l'une quelconque des revendications précédentes, dans lequel la composition composite est une composition composite comprenant :
- une matrice polymérique à base d'un polyamide, qui est un polyamide 6 ;
- des fibres de verre selon une teneur allant de 10% à 16% en masse par rapport à la masse totale de la composition composite ;
- des particules de dihydroxyde de magnésium Mg(OH)₂ revêtues d'une couche comprenant un composé vinylsilane ;
- des particules de dioxyde de titane revêtues d'une couche comprenant un mélange de composés à base d'alumine et de silice et d'un composé polysiloxane ; et
- éventuellement un matériau comprenant un composé silicone comprenant des fonctions (méth)acryliques.

8. Elément de boîtier selon l'une quelconque des revendications précédentes, dans lequel la composition composite est choisie parmi les compositions composites suivantes :
*une composition composite comprenant :
- une matrice polymérique en polyamide 6, à hauteur de 46,4% en masse par rapport à la masse totale de la composition composite ;
- des fibres de verre à hauteur de 10% en masse par rapport à la masse totale de la composition composite ;
- des particules de dihydroxyde de magnésium Mg(OH)₂ revêtues d'une couche comprenant un composé vinylsilane, à hauteur de 40% en masse par rapport à la masse totale de la composition composite ;
- des particules de dioxyde de titane revêtues d'une couche comprenant un mélange de composés à base d'alumine et de silice et d'un composé polysiloxane, à hauteur de 3% en masse par rapport à la masse totale de la composition composite ;
- un additif antioxydant à hauteur de 0,3% en masse par rapport à la masse totale de la composition composite ; et
- de la cire à hauteur de 0,3% en masse par rapport à la masse totale de la composition composite ; et
*une composition composite comprenant :
- une matrice polymérique en polyamide 6, à hauteur de 35,8% en masse par rapport à la masse totale de la composition composite ;
- des fibres de verre à hauteur de 15,6% en masse par rapport à la masse totale de la composition composite ;
- des particules de dihydroxyde de magnésium Mg(OH)₂ revêtues d'une couche comprenant un composé vinylsilane, à hauteur de 40% en masse par rapport à la masse totale de la composition composite ;
- des particules de dioxyde de titane revêtues d'une couche comprenant un mélange de composés à base d'alumine et de silice et d'un composé polysiloxane, à hauteur de 3% en masse par rapport à la masse totale de la composition composite ;
- un matériau comprenant un composé silicone comportant des fonctions méthacryliques, ledit matériau étant présent à hauteur de 5% en masse par rapport à la masse totale de la composition composite ;
- un additif antioxydant à hauteur de 0,3% en masse par rapport à la masse totale de la composition composite ; et
- de la cire à hauteur de 0,3% en masse par rapport à la masse totale de la composition composite.

9. Appareillage électrique comprenant au moins un boîtier comprenant au moins un élément de boîtier tel que défini selon l'une quelconque des revendications 1 à 8.

10. Appareillage électrique selon la revendication 9, comprenant un circuit électrique logé dans ledit boîtier.

11. Appareillage électrique selon la revendication 10, qui est une prise de courant, un disjoncteur, une embase d'interrupteur, une armoire électrique, un coffret électrique, un éclairage de sécurité, un capteur électrique, un onduleur, un minuteur, un gradateur ou un détecteur de mouvement(s).

## Patentansprüche

1. Gehäuseelement für elektrische Geräte, das eine Verbundzusammensetzung umfasst, die eine Polymermatrix umfasst, die mindestens ein lineares Polyamidpolymer umfasst, das aus einer Polykondensation einer Dicarbonsäure hervorgeht, die 4 bis 12 Kohlenstoffatome umfasst, mit einem Diamin, das 4 bis 14 Kohlenstoffatomen umfasst, oder aus einer ringöffnenden Polykondensation von Lactamverbindungen hervorgeht, wobei die Matrix 35 bis 47 Massen-% in Bezug auf die Gesamtmasse der Verbundzusammensetzung ausmacht, wobei Glasfasern, die in einem Anteil von 10 bis 16 Massen-% in Bezug auf die Gesamtmasse der Verbundzusammensetzung vorliegen, Titandioxid, das in Form von Titandioxidpartikeln vorliegt, die mit einer Schicht überzogen sind, die eine Mischung auf der Basis von Aluminiumoxid- und Siliciumdioxidverbindungen und einer Polysiloxanverbindung umfasst, wobei das Titandioxid in einem Anteil von 2,5 bis 3,5 Massen-% in Bezug auf die Gesamtmasse der Verbundzusammensetzung vorliegt, und eine Verbindung, die in Form von Partikeln aus Magnesiumdihydroxid Mg(OH)₂ vorliegt, die mit einer Schicht überzogen sind, die eine Vinylsilanverbindung umfasst, wobei die Verbindung in einem Anteil von mindestens 40 Massen-% in Bezug auf die Gesamtmasse der Verbundzusammensetzung vorhanden ist, dispergiert sind.

2. Gehäuseelement nach Anspruch 1, wobei die Polyamide ausgewählt sind aus:
- Polyamiden 6, also Polyamiden, die eine Verkettung von wiederkehrenden Einheiten der folgenden Formel (I) umfassen: 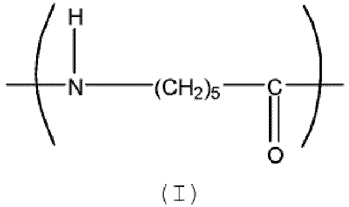
- Polyamiden 6/66, also Polyamiden, die eine Verkettung von wiederkehrenden Einheiten der folgenden Formel (I): 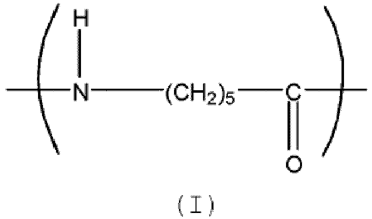
und von wiederkehrenden Einheite der folgenden Formel (II) umfassen : 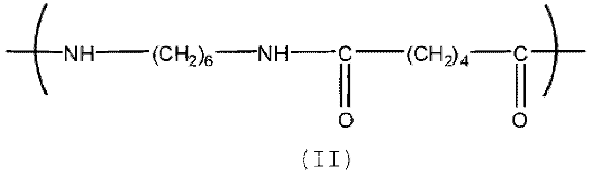
- Polyamiden 6-10, also Polyamiden, die eine Verkettung von wiederkehrenden Einheiten der folgenden Formel (III) umfassen: 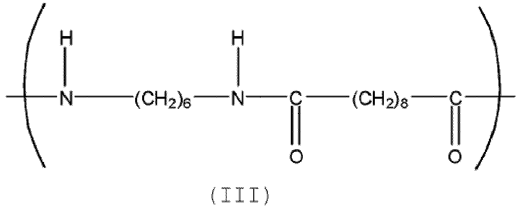
- Polyamiden 11, also Polyamiden, die eine Verkettung von wiederkehrenden Einheiten der folgenden Formel (IV) umfassen: 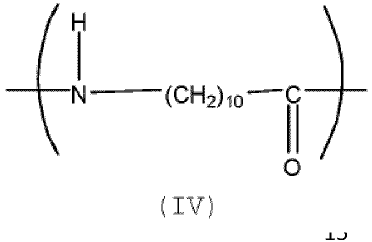
- Polyamiden 12, also Polyamiden, die eine Verkettung von wiederkehrenden Einheiten der folgenden Formel (V) umfassen: 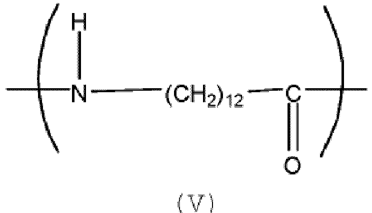 und
- Gemischen davon.

3. Gehäuseelement nach einem der vorhergehenden Ansprüche, wobei das Titandioxid in der Rutilform vorliegt.

4. Gehäuseelement nach einem der vorhergehenden Ansprüche, wobei die Verbundzusammensetzung weiter ein Material enthält, das eine Silikonverbindung mit (Meth)acrylfunktionen umfasst.

5. Gehäuseelement nach Anspruch 4, wobei das Material in der Verbundzusammensetzung in einem Anteil von 4 bis 6 Massen-% in Bezug auf die Gesamtmasse der Verbundzusammensetzung vorhanden ist.

6. Gehäuseelement nach einem der vorhergehenden Ansprüche, wobei die Verbundzusammensetzung zusätzlich ein oder mehrere Additive umfasst, die aus Antioxidationsadditiven und Schmiermitteladditiven ausgewählt sind.

7. Gehäuseelement nach einem der vorhergehenden Ansprüche, wobei die Verbundzusammensetzung eine Verbundzusammensetzung ist, die Folgendes umfasst:
- eine Polymermatrix auf der Basis eines Polyamids, bei dem es sich um ein Polyamid 6 handelt;
- Glasfasern mit einem Anteil von 10 bis 16 Massen-% in Bezug auf die Gesamtmasse der Verbundzusammensetzung;
- Partikel aus Magnesiumdihydroxid Mg(OH)₂, die mit einer Schicht überzogen sind, die eine Vinylsilanverbindung umfasst;
- Partikel aus Titandioxid, die mit einer Schicht überzogen sind, die eine Mischung aus Verbindungen auf der Basis von Aluminiumoxid und Siliciumdioxid und einer Polysiloxanverbindung umfasst; und
- gegebenenfalls ein Material, das eine Silikonverbindung umfasst, die (Meth)acrylfunktionen umfasst.

8. Gehäuseelement nach einem der vorhergehenden Ansprüche, wobei die Verbundzusammensetzung aus den folgenden Verbundzusammensetzungen ausgewählt ist:
*einer Verbundzusammensetzung, die Folgendes umfasst:
- eine Polymermatrix aus Polyamid 6 in Höhe von 46,4 Massen-% in Bezug auf die Gesamtmasse der Verbundzusammensetzung;
- Glasfasern in Höhe von 10 Massen-% in Bezug auf die Gesamtmasse der Verbundzusammensetzung;
- Partikel aus Magnesiumdihydroxid Mg(OH)₂, die mit einer Schicht überzogen sind, die eine Vinylsilanverbindung umfasst in Höhe von 40 Massen-% in Bezug auf die Gesamtmasse der Verbundzusammensetzung;
- Partikel aus Titandioxid, die mit einer Schicht überzogen sind, die eine Mischung aus Verbindungen auf der Basis von Aluminiumoxid und Siliciumdioxid und eine Polysiloxanverbindung umfasst in Höhe von 3 Massen-% in Bezug auf die Gesamtmasse der Verbundzusammensetzung;
- ein Antioxidationsmittelzusatz in Höhe von 0,3 Massen-% in Bezug auf die Gesamtmasse der Verbundzusammensetzung; und
- Wachs in Höhe von 0,3 Massen-% in Bezug auf die Gesamtmasse der Verbundzusammensetzung; und
*einer Verbundzusammensetzung, die Folgendes umfasst:
- eine Polymermatrix aus Polyamid 6 in Höhe von 35,8 Massen-% in Bezug auf die Gesamtmasse der Verbundzusammensetzung;
- Glasfasern in Höhe von 15,6 Massen-% in Bezug auf die Gesamtmasse der Verbundzusammensetzung;
- Partikel aus Magnesiumdihydroxid Mg(OH)₂, die mit einer Schicht überzogen sind, die eine Vinylsilanverbindung umfasst, in Höhe von 40 Massen-% in Bezug auf die Gesamtmasse der Verbundzusammensetzung;
- Partikel aus Titandioxid, die mit einer Schicht überzogen sind, die eine Mischung aus Verbindungen auf der Basis von Aluminiumoxid und Siliciumdioxid und eine Polysiloxanverbindung umfasst in Höhe von 3 Massen-% in Bezug auf die Gesamtmasse der Verbundzusammensetzung;
- ein Material, das eine Silikonverbindung umfasst, die Methacrylfunktionen enthält, wobei das Material in Höhe von 5 Massen-% in Bezug auf die Gesamtmasse der Verbundzusammensetzung vorhanden ist;
- ein Antioxidationsmittelzusatz in einer Menge von 0,3 Massen-% in Bezug auf die Gesamtmasse der Verbundzusammensetzung; und
- Wachs in einer Menge von 0,3 Massen-% in Bezug auf die Gesamtmasse der Verbundzusammensetzung.

9. Elektrisches Gerät, umfassend mindestens ein Gehäuse, das mindestens ein Gehäuseelement umfasst, wie es nach einem der Ansprüche 1 bis 8 definiert ist.

10. Elektrisches Gerät nach Anspruch 9, umfassend eine elektrische Schaltung, die in dem Gehäuse untergebracht ist.

11. Elektrisches Gerät nach Anspruch 10, bei dem es sich um eine Steckdose, einen Leistungsschalter, eine Schalterbasis, einen Schaltschrank, einen Schaltkasten, eine Sicherheitsbeleuchtung, einen elektrischen Sensor, einen Wechselrichter, eine Zeitschaltuhr, einen Dimmer oder einen Bewegungsmelder handelt.

## Claims

1. An element for a housing for electrical apparatus comprising a composite composition comprising a polymer matrix comprising at least one linear polyamide polymer resulting from a polycondensation of a dicarboxylic acid comprising 4 to 12 carbon atoms with a diamine comprising from 4 to 14 carbon atoms or resulting from a ring-opening polycondensation of lactam compounds, said matrix representing 35 to 47 mass% relative to the total mass of the composite composition, in which are dispersed glass fibres, which are present in a content ranging from 10 to 16 mass% relative to the total mass of the composite composition, titanium dioxide being in the form of titanium dioxide particles coated with a layer comprising a mixture of compounds based on alumina and silica and a polysiloxane compound, said titanium dioxide being present in a content ranging from 2.5 to 3.5 mass% relative to the total mass of the composite composition, and a compound being in the form of magnesium dihydroxide Mg(OH)₂ particles coated with a layer comprising a vinylsilane compound, said compound being present in a content of at least 40 mass% relative to the total mass of the composite composition.

2. The housing element according to claim 1, wherein the polyamides are selected from:
- polyamides 6, namely polyamides comprising a sequence of repeating units of the following formula (I): 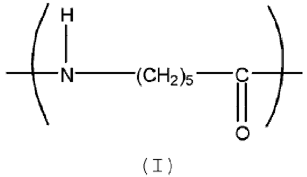
- polyamides 6/66, namely polyamides comprising a sequence of repeating units of the following formula (I): 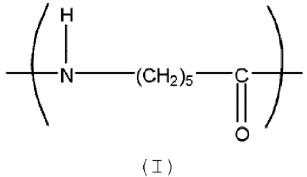
and of repeating units of the following formula (II): 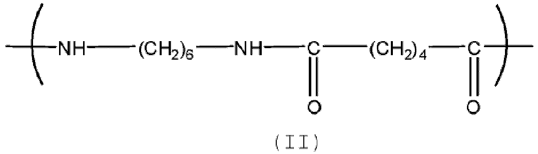
- polyamides 6-10, namely polyamides comprising a sequence of repeating units of the following formula (III): 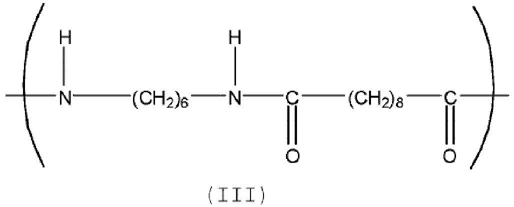
- polyamides 11, namely polyamides comprising a sequence of repeating units of the following formula (IV): 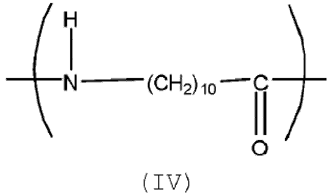
- polyamides 12, namely polyamides comprising a sequence of repeating units of the following formula (V): 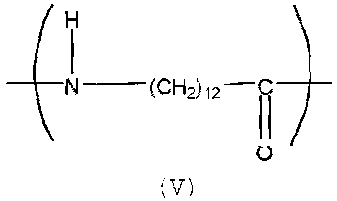 and
- mixtures thereof.

3. The housing element according to any one of the preceding claims, wherein the titanium dioxide is in the rutile form.

4. The housing element according to any one of the preceding claims, wherein the composite composition further comprises a material comprising a silicone compound comprising (meth)acrylic functions.

5. The housing element according to claim 4, wherein the material is present in the composite composition in a content ranging from 4 to 6 mass% relative to the total mass of the composite composition.

6. The housing element according to any one of the preceding claims, wherein the composite composition further comprises one or more additives selected from the antioxidant additives and the lubricant additives.

7. The housing element according to any one of the preceding claims, wherein the composite composition is a composite composition comprising:
- a polymer matrix based on a polyamide, which is a polyamide 6;
- glass fibres in a content ranging from 10% to 16 mass% relative to the total mass of the composite composition;
- magnesium dihydroxide Mg(OH)₂ particles coated with a layer comprising a vinylsilane compound;
- titanium dioxide particles coated with a layer comprising a mixture of compounds based on alumina and silica and a polysiloxane compound; and
- optionally a material comprising a silicone compound comprising (meth)acrylic functions.

8. The housing element according to any one of the preceding claims, wherein the composite composition is selected from the following composite compositions:
*a composite composition comprising:
- a polyamide 6 polymer matrix, in an amount of 46.4 mass% relative to the total weight of the composite composition;
- glass fibres in an amount of 10 mass% relative to the total mass of the composite composition;
- magnesium dihydroxide Mg(OH)₂ particles coated with a layer comprising a vinylsilane compound, in an amount of 40 mass% relative to the total mass of the composite composition;
- titanium dioxide particles coated with a layer comprising a mixture of compounds based on alumina and silica and a polysiloxane compound, in an amount of 3 mass% relative to the total mass of the composite composition;
- an antioxidant additive in an amount of 0.3 mass% relative to the total mass of the composite composition; and
- wax in an amount of 0.3 mass% relative to the total mass of the composite composition; and
*a composite composition comprising:
- a polyamide 6 polymer matrix, in an amount of 35.8 mass% relative to the total weight of the composite composition;
- glass fibres in an amount of 15.6 mass% relative to the total mass of the composite composition;
- magnesium dihydroxide Mg(OH)₂ particles coated with a layer comprising a vinylsilane compound, in an amount of 40 mass% relative to the total mass of the composite composition;
- titanium dioxide particles coated with a layer comprising a mixture of compounds based on alumina and silica and a polysiloxane compound, in an amount of 3 mass% relative to the total mass of the composite composition;
- a material comprising a silicone compound comprising methacrylic functions, said material being present in an amount of 5 mass% relative to the total mass of the composite composition;
- an antioxidant additive in an amount of 0.3 mass% relative to the total mass of the composite composition; and
- wax in an amount of 0.3 mass% relative to the total mass of the composite composition.

9. An electrical apparatus comprising at least one housing comprising at least one housing element as defined according to any one of claims 1 to 8.

10. The electrical apparatus according to claim 9, comprising an electrical circuit housed in said housing.

11. The electrical apparatus according to claim 10, which is a power socket, a circuit breaker, a switch base, an electrical cabinet, an electrical box, a safety light, an electrical sensor, an inverter, a timer, a dimmer or movement(s) detector.
